**Europäisches Patentamt**

**European Patent Office**

**Office européen des brevets**

(11) Veröffentlichungsnummer: **0 385 965**
**A1**

## EUROPÄISCHE PATENTANMELDUNG

(21) Anmeldenummer: **90890031.9**

(22) Anmeldetag: **12.02.90**

(51) Int. Cl.⁵: **C02F 3/20**

(30) Priorität: **13.02.89 AT 300/89**

(43) Veröffentlichungstag der Anmeldung:
**05.09.90 Patentblatt 90/36**

(84) Benannte Vertragsstaaten:
**AT CH DE FR GB IT LI NL**

(71) Anmelder: **Christ AG**
**Hauptstrasse 192**
**CH-4147 Aesch(CH)**

(72) Erfinder: **Klima, Horst**
**Kaiserstrasse 96**
**A-1070 Wien(AT)**
Erfinder: **Malekfatehi, Youness, Dipl.-Ing.**
**Weyringerstrasse 7A/13**
**A-1040 Wien(AT)**

(74) Vertreter: **Rippel, Andreas, Dipl.-Ing.**
**Maxingstrasse 34**
**A-1130 Wien(AT)**

(54) **Einrichtung zum feinblasigen Belüften von Abwasser.**

(57) Eine Einrichtung zum feinblasigen Belüften von Abwasser mittels unter dem Wasserspiegel angeordneter, an einer Luftverteilerleitung angeschlossener Luftverteiler weist eine gelochte Luftverteiler - Folie 3 auf, die an ihren Randbereichen mit einem Formkörper 2,2′ dichtend verbunden ist. Der Formkörper 2,2′ weist einen rechteckigen Grundriß und gerundete Längskanten auf und die Luftverteiler - Folie 3 ist um den Formkörper 2,2′ herum gespannt sowie an der Unterseite mittels einer Bodenplatte 1 mit dem Formkörper 2,2′ verbunden. Vorzugsweise sind zur weiteren Befestigung und Abdichtung der Luftverteiler - Folie 3 Spannbänder 12 um den Formkörper 2,2′ gelegt.

Der Formkörper 2,2′ wird aus Rohren gebildet, könnte aber auch aus einer Platte bestehen, deren Kanten abgerundet sind.

FIG. 2

EP 0 385 965 A1

## Einrichtung zum feinblasigen Belüften von Abwasser

Die Erfindung bezieht sich auf eine Einrichtung zum feinblasigen Belüften von Abwasser mittels unter dem Wasserspiegel angeordneter, an einer Luftverteilerleitung angeschlossener Luftverteiler, die eine gelochte Luftverteiler - Folie aufweisen, die an ihren Randbereichen mit einem Formkörper dichtend verbunden ist.

Bei der biologischen Reinigung von Abwasser nach dem Belebtschlamm - Verfahren hängt der Reinigungseffekt in hohem Masse von einer feinblasigen und gleichmäßigen Belüftung ab, damit möglichst viel Sauerstoff in das Wasser abgegeben werden kann, und dieses den Sauerstoff auch aufnehmen kann. Es wurden zur feinblasigen Belüftung von Abwasser schon keramische Filter verwendet, die zwar äußerst feinporig sind, aber eine ungleichmäßige Struktur aufweisen. Aus diesem Grunde werden, wie z.B. aus der DE-AS 2 035 651 bekannt ist, perforierte Folien als Luftverteiler - Folien verwendet. Diese Folien können zwar über ihre Lochung Luft feinblasig und gleichmäßig austreten lassen, doch das Hauptproblem dieser Luftverteiler -Folien ist die Dichtung am Rand der Folien. Ist die Luftverteiler -Folie nicht gut gedichtet, entweicht eben am Rand die eingeblasene Luft in großen Blasen, und das Abwasser kann den Luftsauerstoff nur unzureichend aufnehmen. Um dies zu verhindern, werden aufwendige und teure Dichtungskonstruktionen installiert, sodaß dann der Preis des Produktes unverhältnismäßig hoch ist.

Aus der EP-OS 0 160 193 ist eine Einrichtung der eingangs genannten Art bekannt geworden, bei der der Formkörper eine Dom-oder Tellerform aufweist und die Luftverteiler-Folie auf dem Formkörper nur mittels eines Spannbandes befestigt ist. Eine derartige Befestigung ist zwar verhältnismäßig einfach, jedoch nur bei Formkörpern mit kreisförmigem Grundriß anwendbar. Kreisförmige Formkörper können jedoch bei Aneinanderreihung eine gegebene Fläche nur unvollständig ausfüllen, weil zwischen ihnen zwangsläufig viel Platz verbleibt. Eine unzureichende Belüftung kann daher die Folge sein.

Das Ziel der Erfindung war es, eine Belüftungseinrichtung von Abwasser zu schaffen, die die geschilderten Nachteile nicht aufweist, die somit bei einfachem Aufbau eine weitgehende Ausnutzung der vorhandenen Fläche erlaubt. Die der Erfindung zugrunde liegenden Aufgaben wurden dadurch gelöst, daß der Formkörper einen rechteckigen Grundriß und gerundete Längskanten aufweist und die Luftverteiler-Folie um den Formkörper herum gespannt sowie an der Unterseite mittels Klemmteilen mit dem Formkörper verbunden ist, wobei vorzugsweise zur weiteren Befestigung und Abdichtung der Luftverteiler - Folie Spannbänder um den Formkörper gelegt sind.

Eine Ausführungsmöglichkeit der Erfindung ergibt sich, wenn man das Klemmteil als Bodenplatte ausbildet.

Eine besonders billige Ausführungsform der Erfindung wird erreicht, wenn der Formkörper aus Rohren gebildet wird, weil Rohre kostengünstig als Fertigprodukt zugekauft werden können.

Um zu verhindern, daß beim Abschalten der Luftzufuhr Schmutzteile des Abwassers durch die Lochung der Luftverteiler - Folie in den Belüfter gelangen, wird vorgeschlagen, daß der Formkörper aus einer Platte besteht, deren Kanten abgerundet sind.

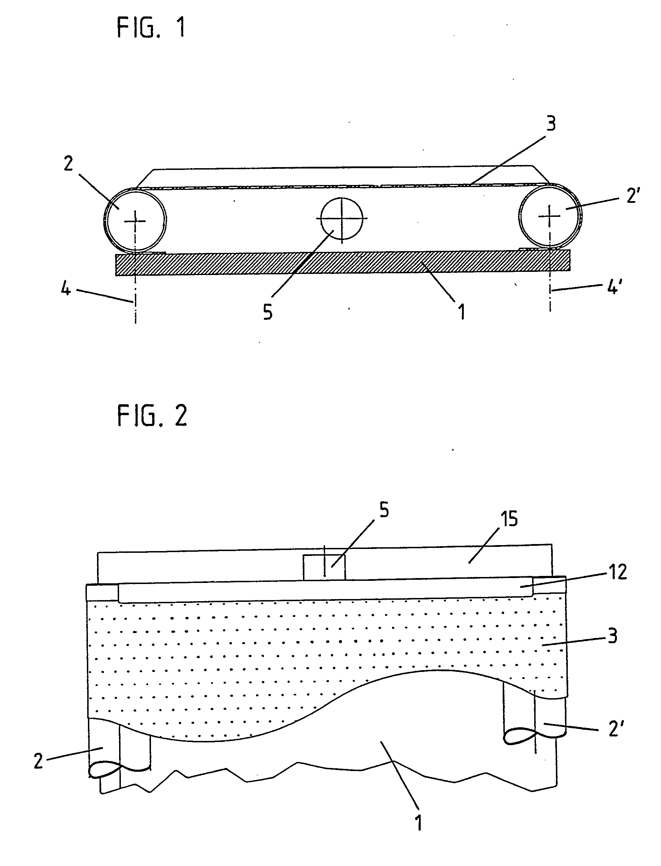

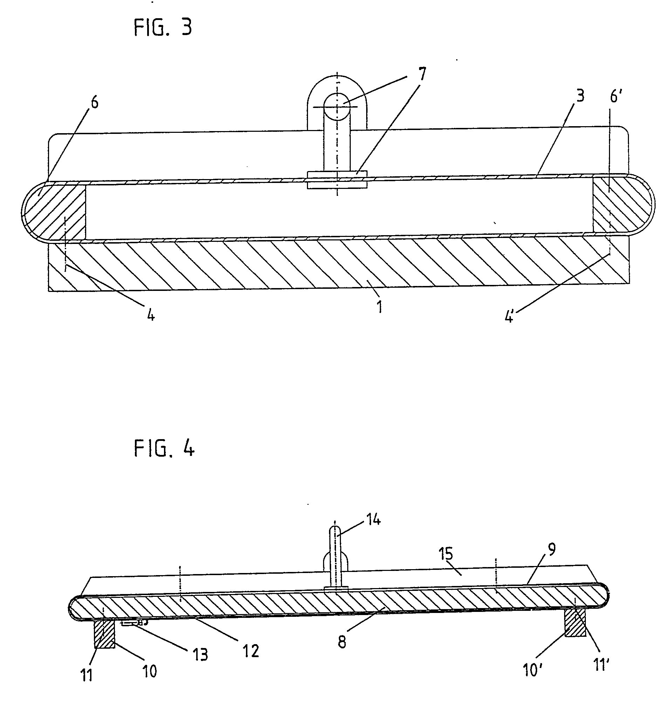

Einzelheiten, Vorteile und besondere Merkmale der Erfindung werden an Hand der Zeichnungen näher erläutert, die verschiedene Ausführungsformen zeigen. Dabei stellt Fig.1 und Fig.2 eine Ausführungsform dar, wobei Fig.1 einen Querschnitt durch einen Belüfter zeigt, und Fig.2 eine Draufsicht. Die Fig.3 und Fig.4 zeigen jeweils weitere Ausführungsformen des Belüfters im Querschnitt.

Ein in Fig.1 und Fig.2 dargestellter erfindungsgemäßer Luftverteiler besteht aus einer festen Bodenplatte 1, die relativ schwer ist, und so eine Hilfe ist, den Belüfter auf dem Grund des Abwasserbekkens zu halten. Über der Bodenplatte 1 ist ein Formkörper angeordnet, der im dargestellten Fall von einem Rohr 2 und einem Rohr 2' gebildet wird. Der Formkörper weist demnach einen rechteckigen Grundriß und gerundete Längskanten auf. Um diesem Formkörper herum ist eine Luftverteiler - Folie 3 gespannt. Diese Luftverteiler - Folie 3, der Formkörper, der von den Rohren 2 und 2' gebildet wird, und die Bodenplatte 1 sind mittels Schraubverbindungen, von denen nur die Mittelinien 4 und 4' dargestellt sind, verbunden. Die Breitseite des Belüfters wird mittels eines Abschlußteils 15 sowie eines um den Formkörper gelegten Spannbandes 12 gedichtet. Die Luftzufuhr erfolgt über einen Lufteintrittsstutzen 5, der als Rohr-oder Schlauchanschlußstutzen mit dichtem Anschlußflansch ausgebildet ist.

Wird nun über den Lufteintrittsstutzen 5 zwischen Luftverteiler - Folie 3 und Bodenplatte 1 Luft oder auch Gas eingeblasen, entweicht es in kleinen Blasen über die Lochung der Luftverteiler -Folie 3 in das Abwasser. Die sich daraus ergebende große Gesamtoberfläche der austretenden Gasmasse ermöglicht eine größtmögliche Gasdiffusion.

Fig.3 zeigt eine andere Ausführungsform der Erfindung, die sich von der in Fig.1 und Fig.2 gezeigten Form im wesentlichen dadurch unterscheidet, daß der Formkörper nicht aus Rohren sondern aus Leisten 6 und 6' besteht. Ein Lufteintrittsstutzen 7 ist hier nicht seitlich, sondern in der Luftverteiler - Folie 3 eingelassen.

In Fig.4 wird ein weiteres wehr vorteilhaftes Ausführungsbeispiel der Erfindung gezeigt. Es weist einen festen Formkörper 8 auf, der aus einer Platte besteht, deren Kanten abgerundet sind, und die relativ zum Auftrieb des Belüfters so schwer ist, daß der Belüfter auf dem Grund des Abwasserbekkens gehalten wird oder nur leicht verankert werden muß. Um diesem Formkörper 8 ist eine Luftveteiler - Folie 9 gespannt, und diese ist zwischen dem Formkörper 8 und Belüfterfüßen 10 und 10' eingeklemmt. Der Formkörper 8, die Luftverteiler - Folie 9 und die Belüfterfüße 10 respektive 10' sind durch Schraubverbindungen, von denen nur die Mittellinien 11 und 11' gezeigt sind, verbunden. Die Breitseite des Belüfters wird mittels eines um den Formkörper gelegten Spannbandes 12 gedichtet, dessen Spanner 13 neben dem Belüfterfuß 10 angeordnet ist. Ferner ist ein Abschlußteil 15 angeordnet. Die Luftzufuhr erfolgt über einen Lufteintrittsstutzen 14, der als Rohr- oder Schlauchanschlußstück mit dichtem Anschlußflansch ausgebildet ist.

Wird nun über den Lufteintrittsstutzen 14 zwischen Luftverteiler - Folie 9 und Formkörper 8 Luft oder auch Gas eingeblasen, entweicht es ebenfalls in kleinen Blasen über die Lochung der Luftverteiler - Folie 9 in das Abwasser. Ein besonderer Vorteil dieser Ausführungsform ist, daß beim Abschalten der Luft- (Gas) Zufuhr des Belüfter nicht zusammensinkt und Schmutzteile des Abwassers durch die Lochung der Luftverteilerfolie 9 in den Belüfter gelangen.

Die Erfindung ist nicht auf die dargestellten Ausführungsbeispiele beschränkt. So muß insbesondere die Verbindung zwischen Formkörper, Luftverteiler - Folie und Bodenplatte respektive Belüfterfüßen nicht durch Schraubenverbindungen hergestellt werden, sondern die Verbindung kann auch als Vernietung, Verklebung od.dgl. ausgebildet sein.

**Ansprüche**

1. Einrichtung zum feinblasigen Belüften von Abwasser mittels unter dem Wasserspiegel angeordneter, an einer Luftverteilerleitung angeschlossener Luftverteiler, die eine gelochte Luftverteiler -Folie aufweisen, die an ihren Randbereichen mit einem Formkörper dichtend verbunden ist, **dadurch gekennzeichnet**, daß der Formkörper (2,2';6,6';8) einen rechteckigen Grundriß und gerundete Längskanten aufweist und die Luftverteiler - Folie (3,9) um den Formkörper (2,2';6,6';8) herum gespannt sowie an der Unterseite mittels Klemmteilen (1;10,10') mit dem Formkörper (2,2';6,6';8) verbunden ist, wobei vorzugsweise zur weiteren Befestigung und Abdichtung der Luftverteiler - Folie (3,9) Spannbänder (12) um den Formkörper (2,2';6,6';8) gelegt sind.

2. Einrichtung nach Anspruch 1, **dadurch gekennzeichnet**, daß das Klemmteil als Bodenplatte (1) ausgebildet ist.

3. Einrichtung nach Anspruch 1 oder 2, **dadurch gekennzeichnet**, daß der Formkörper aus Rohren (2,2') gebildet wird.

4. Einrichtung nach Anspruch 1 oder 2, **dadurch gekennzeichnet**, daß der Formkörper aus einer Platte (8) besteht, deren Kanten abgerundet sind.

FIG. 1

FIG. 2

EP 0 385 965 A1

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 664 647 (XODAR CORP.) * Spalte 2, Zeile 49 - Spalte 3, Zeile 6 * | 1,3 | C 02 F 3/20 |
| | --- | | |
| A | DE-A-3 441 731 (SUPRAFILT) * Titelseite, Zusammenfassung; Seite 14, letzter Absatz - Seite 15, erster Absatz * | 1,2,4 | |
| | --- | | |
| A | US-A-3 063 689 (P.D. COPPOCK) * Spalte 1, Zeile 68 - Spalte 2, Zeile 21; Spalte 4, Zeilen 59-62 * | 1,2,4 | |
| | ----- | | |

RECHERCHIERTE SACHGEBIETE (Int. Cl.5)

C 02 F
B 01 F

Der vorliegende Recherchenbericht wurde für alle Patentansprüche erstellt

| Recherchenort | Abschlußdatum der Recherche | Prüfer |
|---|---|---|
| DEN HAAG | 18-04-1990 | TEPLY J. |

# ANHANG ZUM EUROPÄISCHEN RECHERCHENBERICHT
## ÜBER DIE EUROPÄISCHE PATENTANMELDUNG NR.

EP   90  89  0031

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am 17/07/90
Diese Angaben dienen nur zur Unterrichtung und erfolgen ohne Gewähr.

| Im Recherchenbericht angeführtes Patentdokument | Datum der Veröffentlichung | Mitglied(er) der Patentfamilie | Datum der Veröffentlichung |
|---|---|---|---|
| US-A- 3664647 | 23-05-72 | Keine | |
| DE-A- 3441731 | 15-05-86 | Keine | |
| US-A- 3063689 | | Keine | |

EPO FORM P0461

Für nähere Einzelheiten zu diesem Anhang : siehe Amtsblatt des Europäischen Patentamts, Nr.12/82